# EUROPÄISCHE PATENTSCHRIFT

(11) **EP 3 887 318 B1**
(45) Veröffentlichungstag und Bekanntmachung des Hinweises auf die Patenterteilung: **10.01.2024**
(21) Anmeldenummer: 19809809.7
(22) Anmeldetag: 26.11.2019
(51) Int. Cl.: C02F 1/46, C02F 1/461

(54) **VERFAHREN UND VORRICHTUNG ZUR PLASMAINDUZIERTEN WASSERREINIGUNG**
METHOD AND DEVICE FOR A PLASMA-INDUCED WATER PURIFICATION
PROCÉDÉ ET DISPOSITIF DE PURIFICATION D'EAU INDUITE PAR PLASMA

(30) Priorität: 30.11.2018 DE 102018130599; 14.06.2019 DE 102019116265
(43) Veröffentlichungstag der Anmeldung: 06.10.2021
(73) Patentinhaber: Graforce GmbH, 12489 Berlin (DE)
(72) Erfinder: HANKE, Jens, 12489 Berlin (DE); KNIST, Sascha, 12489 Berlin (DE)
(74) Vertreter: Eisenführ Speiser
(86) Internationale Anmeldenummer: PCT/EP2019/082557
(87) Internationale Veröffentlichungsnummer: WO 2020/109294

(56) Entgegenhaltungen:
- WO-A1-2017/161035
- DE-A1- 4 440 813
- US-A1- 2014 061 060

## Beschreibung

Die Erfindung betrifft ein Verfahren sowie eine Vorrichtung zur plasmainduzierten Wasserreinigung.

Die Wasserreinigung, insbesondere die Abwasserreinigung, stellt Abwasserentsorgungs-Betriebe zunehmend vor große Herausforderungen. Abwasser ist durch zahlreiche Schadstoffe verunreinigt, dabei sind Stickstoffverbindungen nach Kohlenstoffverbindungen dabei die zweithäufigsten Verbindungen. Haushaltsabwässer sind unter anderem mit Stickstoff in Form von Ammoniumverbindungen verunreinigt. Diese reagieren bei zunehmendem pH-Wert und steigender Temperatur zum stark giftigen Ammoniak (NH3). Auch Nitrite oder Nitrate etwa aus dem Grundwasser belasten das Abwasser. Weitere Belastungen entstehen beispielsweise durch die Einleitung von Hormonen oder Medikamentenrückständen.

Bisherige Verfahren zur Reinigung des Abwassers sind immens aufwendig und es werden sehr große Mengen an Energie dafür benötigt. Darüber hinaus sind Kläranlagen nur begrenzt in der Lage, das Abwasser zu reinigen. Insbesondere Restabwässer wie Brüdenwasser, Presswasser und Zentratwasser lassen sich durch die zumeist biologischen Prozesse im Stand der Technik nicht mehr einfach aufbereiten. Experimentelle Verfahren wie die Nutzung konventioneller Plasmaprozesse sind nicht effizient genug für einen großflächigen Einsatz wie in der Abhandlung "Plasma-based water purification: Challenges and prospects for the future" von John E. Foster, in Physics of Plasmas 24, 055501 (2017) beschrieben.

Hier setzt die Erfindung an, die ein effizientes Verfahren zur Wasserreinigung auch von hoch belasteten Abwässern bereitstellt.

Gemäß einem ersten Aspekt betrifft die Erfindung ein Verfahren zur Reinigung von mit mindestens einem Abwasserinhaltsstoff belastetem Wasser, wobei der Abwasserinhaltsstoff mindestens eine Verbindung mit einer Bindungsenergie aufweist, die geringer ist als die Bindungsenergie einer einfachen Wasserstoff-Sauerstoffbindung.

Das Verfahren umfasst die Schritte:
- Bereitstellen des belasteten Wassers mit einer vorbestimmten Füllhöhe in einem ungeerdeten Wasserreservoir innerhalb eines Reaktionsraumes;
- Beaufschlagen genau einer in einem vorbestimmten Abstand über der Füllhöhe des Wasserreservoirs angeordneten flächig ausgebildeten, gekühlten Plasmaelektrode mit einer hochfrequenten Wechselspannung bei Atmosphärendruck, derart, dass sich im Hochfrequenzfeld zwischen der Plasmaelektrode und einer Oberfläche des Wassers ein Plasma ausbildet, dessen Energieeintrag ausreichend ist, dass Verbindungen mit einer Bindungsenergie, die kleiner oder gleich derjenigen der einfachen Wasserstoff-Sauerstoff-bindung ist, dissoziiert werden;
- Erfassen einer Konzentration des mindestens einen Abwasserinhaltsstoffs.

Die Erfindung nutzt eine sogenannte Plasma-Elektrolyse, also ein nicht-thermisches Plasma, das Elektronenstoß-induzierte Prozesse initiiert. Dies ermöglicht dissoziative Elektronenanlagerungen und dissoziative Anregungen des Wassers und der darin enthaltenen Abwasserinhaltsstoffe. Die Dissoziationsreaktionen erfolgen gemäß der Erfindung nicht wie bei den anderen Verfahren an zwei Elektroden und/oder einer Membranfläche, sondern in einem plasmachemischen Gas- und Wasservolumenprozess, hierdurch ergeben sich wesentlich höhere Wirkungsgrade als bei herkömmlichen Verfahren zur Wasserreinigung. Die Entladungen in diesem Gas- und Wasservolumen sowie an der Wasseroberfläche führen zur Erzeugung von freien Elektronen in einem für die Dissoziation von Verbindungen mit Bindungsenergien, die geringer sind als diejenige der einfachen Wasserstoff-Sauerstoffbindung, günstigen Energiebereich (bis zu 20eV). Durch Stöße mit den Wasser- und Gasmolekülen kommt es zur Bildung zahlreicher angeregter Moleküle- und Atomspezies. Über eine Zweistoßreaktion und eine extreme Ladungsverschiebung zwischen Elektrode einerseits und dem Wasser und der enthaltenen Abwasserinhaltsstoffe andererseits erfolgt die Dissoziation.

Die Erfindung schließt weiterhin die Erkenntnis ein, dass eine Vielzahl von Abwasserinhaltsstoffen Verbindungen aufweist, die eine geringere Bindungsenergie als diejenige der einfachen Wasserstoff-Sauerstoffbindung haben. So verfügt Ammonium beispielsweise über eine einfache N-H-Bindung, Nitrate über eine einfache N-O-Bindung in Hormonen und Medikamentenrückständen sind vielfach einfache Kohlenstoffverbindungen vorhanden. Damit kann das Wasser von den unerwünschten Abwasserinhaltstoffen über eine Dissoziation dieser Verbindungen gereinigt werden, ohne dass das Wasser selbst signifikant aufgebraucht wird, da die Verbindungen der Abwasserinhaltsstoffe schneller dissoziiert werden als die Wasserstoff-Sauerstoffbindung.

Der Erfindung liegt weiterhin die Erkenntnis zu Grund, dass über die Verwendung hochfrequenter Wechselspannung mit nur einer Plasmaelektrode, Plasmen bei Atmosphärendruck gezündet und insbesondere flächige Plasmen bei Atmosphärendruck betrieben werden können, was mit Gleichspannung nicht möglich ist. Ein Betrieb bei Atmosphärendruck senkt die Kosten für Anlagen und Betrieb deutlich. Das Plasma bildet sich zwischen der Wasseroberfläche des Wassers im Reservoir und der Plasmaelektrode flächig aus, damit erfolgt auch die Dissoziation von Abwasserinhaltsstoffen, die Bindungsenergien aufweisen, die kleiner derjenigen von Wasser ist, flächig und im gesamten Volumen. Damit ist auch eine großvolumige Wasserreinigung möglich.

Bei aus dem Stand der Technik, wie beispielsweise der DE 10 2011 081 915 A1 oder der Abhandlung "Plasma-based water purification: Challenges and prospects for the future" von John E. Foster, in Physics of Plasmas 24, 055501 (2017), bekannten Verfahren der Plasmaelektrolyse, die zwei Elektroden nutzen, bilden sich bei Atmosphärendruck hingegen nur punktuelle Entladungen zwischen den Elektroden. Auch aus DE4440813A1 ist ein Verfahren zur Behandlung von Flüssigkeiten mit wenigstens zwei Elektroden bekannt.

Ein weiterer Vorteil der im Rahmen der Erfindung entstehenden Hochfrequenz-Entladungen gegenüber mit Gleichspannung betriebenen Entladungsformen besteht darin, dass die Elektroden aufgrund der in Hochfrequenz-Plasmen auftretenden Verschiebungsströme keinen direkten Kontakt zum Plasma aufweisen müssen. So wird der Eintrag von Verunreinigungen durch das Elektrodenmaterial in das Plasma unterbunden und gleichzeitig eine längere Lebensdauer der Elektrodensysteme selbst sichergestellt.

Die Erfindung schließt weiterhin die Erkenntnis ein, dass über die Ausbildung eines Plasmas zwischen Plasmaelektrode und Wasserreservoir der direkte Kontakt zwischen Elektrode und Wasser und damit Kontaminationen sowie Elektrodenkorrosion vermieden werden können.

Es hat sich gezeigt, dass bedingt durch den Dissoziationsprozess im Plasma Wasserstoff und Sauerstoff, die in der Regel freigesetzt werden, nicht örtlich getrennt auftreten, sondern sich als Gas mit im Plasma entstehenden Wasserdampf und Wassernebel zu einem Gasgemisch vermischen. Der Plasmaprozess führt zur Inertisierung des Wasserstoff/Sauerstoff-Gasgemischs, d.h. das Gemisch ist schwer entzündbar. Im Reaktionsraum kommt es bei der Dissoziation nicht zur Rekombination der beiden Gase. Damit können Wasserstoff und Sauerstoff sowie weitere Gase über eine gemeinsame Abgasleitung geführt und durch Membranen separiert werden.

Mit dem erfindungsgemäßen Verfahren können daher effizient größere Mengen an belastetem Wasser bei geringeren Kosten gereinigt werden und darüberhinaus wertvolle gasförmige Bestandteile des mindestens einen Abwasserinhaltsstoffs wie beispielsweise Wasserstoff für weitere Verwendungen zur Verfügung gestellt werden.

Unter genau einer flächig ausgebildeten Plasmaelektrode wird im Rahmen dieser Anmeldung neben der bevorzugten Variante einer einstückig ausgebildeten Plasmaelektrode auch eine Plasmaelektrodenanordnung aus mehreren nebeneinander angeordneten Einzelelektroden im vorbestimmten Abstand über dem Wasserreservoir verstanden, die die genau eine Plasmaelektrode bilden.

Nachfolgend werden vorteilhafte Ausführungsformen des erfindungsgemäßen Verfahrens beschrieben. Die zusätzlichen Merkmale der Ausführungsbeispiele können zur Bildung weiterer Ausführungsformen miteinander kombiniert werden, es sei denn, sie sind in der Beschreibung ausdrücklich als Alternativen zueinander beschrieben.

In einer bevorzugten Ausführungsform erfolgt das Beaufschlagen der genau einen Plasmaelektrode mit einer hochfrequenten Wechselspannung bei Atmosphärendruck derart, dass sich ein kontrahiertes Plasma ausbildet. Von einem kontrahierten Plasma wird gesprochen, wenn es sich um eine oder mehrere große Entladungen handelt, die zudem über eine geringe Beweglichkeit über die Wasseroberfläche verfügen. Dies im Unterschied zu einem filamentierten Plasma, bei dem es eine Vielzahl von kleinen Entladungen gibt, die sich vergleichsweise stark über die Wasseroberfläche bewegen. Im Rahmen der Erfindung wurde erkannt, dass eine Reinigung von belastetem Wasser besonders effizient ist, wenn das erzeugte Plasma ein kontrahiertes Plasma ist.

Bevorzugt wird ein kontrahiertes Plasma darüber erzeugt, dass zusätzlich zur hochfrequente Wechselspannung eine Gleichspannung, bevorzugt mit 100 V bis 3000 V und 0,01 mA bis 250mA, mit dem belasteten Wasser im Wasserreservoir verbunden wird. Hierbei ist eine Gleichspannungsquelle mit ihrem Minuspol mit dem Wasserreservoir verbunden. Es wurde erkannt, dass eine derart angeschlossene Gleichspannung ähnlich einer Offsetspannung wirkt und zu einem kontrahierten Plasma und einer verbesserten Reinigungsleistung führt. Dabei tritt ein geringer Gleichstrom im belasteten Wasser auf, der nur über das Plasma der Elektrode fließt.

Alternativ oder zusätzlich wird ein kontrahierter Modus des Plasmas erreicht, in dem die Wassertemperatur unter 25 °C gehalten wird. Hierzu kann beispielsweise vortemperiertes Wasser dem Reservoir zugeführt. Die Temperierung außerhalb des Reservoirs kann beispielsweise über den Einsatz von Wärmetauschern oder Kühlaggregaten erreicht werden. Alternativ oder zusätzlich ist aber auch eine Temperierung des Wasserreservoirs über beispielsweise eine Kühleinrichtung direkt am Wasserreservoir möglich.

In einer bevorzugten Ausführungsform umfasst das Verfahren weiter:
- Vergleichen der erfassten Konzentration mit einem hinterlegten Grenzwert und bei dem, wenn die erfasste Konzentration kleiner oder gleich dem hinterlegten Grenzwert ist:
- das Beaufschlagen beendet wird oder
- das behandelte Wasser abgeführt und durch belastetes Wasser ersetzt wird.

Alternativ wird das Beaufschlagen über einen vorbestimmten Zeitraum durchgeführt und erst danach die Konzentration erfasst und entsprechend verglichen. Über die Vergleiche kann sichergestellt werden, dass das behandelte Wasser ausreichend für eine jeweilige Anschlussverwendung gereinigt wurde.

Das Erfassen der Konzentration erfolgt in einer Ausführungsform kontinuierlich, so dass eine permanente Überwachung möglich ist. Alternativ kann das Erfassen der Konzentration aber auch in vorbestimmten Zeitabständen erfolgen.

Der hinterlegte Grenzwert ist bevorzugt ein gesetzlicher Grenzwert oder kleiner als ein gesetzlicher Grenzwert. Damit ist das behandelte Wasser für weitere Einsätze, wie als Trinkwasser, auch verwendbar, beispielsweise liegt der Grenzwert für organischen Kohlenstoff im Trinkwasser liegt bei 150 mg/l; für Ammonium bei 0,5 mg/l. Für eine Einleitung von organischem Kohlenstoff ins Abwasser liegt der Grenzwert bei Starkverschmutzern bei 2000 mg/l.

Als belastetes Wasser kommen beispielsweise kommunale oder industrielle Abwasser, Holzgaskondensatwasser, Fettwasser, Zellulosewasser, Brüdenwasser, Zentratwasser, Presswasser, Prozesswasser aus einer Klärschlammbehandlung, Deponiesickerwasser, Waschwassser beispielsweise aus der Rauchgasreinigung, veröltes Wasser, Bergbauabwasser, Abwasser aus der Ölgewinnung (beispielsweise aus Fracking, von Bohrplattformen), Ammoniakwasser, Gülle (beispielsweise Schweine-, Rinder- oder Geflügelgülle), flüssigen Gärreste oder aus diesen gewonnene Prozesswasser in Frage.

Das Bereitstellen des belasteten Wassers umfasst in einer Ausführungsform ein Aufkonzentrieren des mindestens einen Abwasserinhaltsstoffs im belasteten Wasser. Hierüber steht der Abwasserinhaltsstoff in entsprechend hoher Konzentration für die anschließende Reinigung zur Verfügung, die gemäß der Erfindung nicht nur der Erzeugung von gereinigtem Wasser, sondern auch der Bereitstellung von für eine spätere Nutzung wertvoller Bestandteile des Abwasserinhaltsstoffes dient. Dieser Ausführungsform liegt die Erkenntnis zugrunde, dass eine für eine anschließende Reinigung zunächst widersinnig scheinende Erhöhung der Konzentration des Abwasserinhaltsstoff in den erfindungsgemäßen Reinigungsverfahren zu einer Erhöhung der Ausbeute an wertvollen gasförmigen Bestandteilen des Abwasserinhaltsstoffes führt und gleichzeitig das Reinigungsergebnis nicht verschlechtert. Des Weiteren hat sich herausgestellt, dass bei einer starken Aufkonzentration von Abwasserinhaltsstoffen wie beispielsweise Ammoniak oder Kohlenwasserstoffketten bevorzugt die Abwasserinhaltsstoffe gespalten werden und die Spaltung des Wassermoleküls kaum erfolgt, in Grenzfällen bis zum Stopp der Wasserspaltung.

Das Aufkonzentrieren kann beispielsweise über eine Entwässerung, eine Membrandestillation oder eine Fällung, beispielsweise eine Magnesium-Ammonium-Phosphatfällung (MAP-Fällung), oder unter Nutzung eines Ionenaustauschers erfolgen.

Unter Abwasser werden beispielsweise kommunale oder industrielle Abwasser, Holzgaskondensatwasser, Fettwasser, Zellulosewasser, Brüdenwasser, Zentratwasser, Presswasser, Waschwassser beispielsweise aus der Rauchgasreinigung, veröltes Wasser, Bergbauabwasser, Abwasser aus der Ölgewinnung (beispielsweise aus Fracking, von Bohrplattformen), Ammoniakwasser, Prozesswasser aus einer Klärschlammbehandlung, Deponiesickerwasser, Gülle (beispielsweise Schweine-, Rinder- oder Geflügelgülle), flüssige Gärreste oder aus diesen gewonnenes Prozesswasser verstanden.

Somit werden unter belastetem Wasser sowohl beispielsweise die zuvor erläuterten Abwasserarten, so wie sie jeweils anfallen verstanden als auch ein daraus durch Aufkonzentrieren gewonnenes belastetes Wasser, das deutlich höhere Abwasserinhaltsstoffkonzentrationen aufweisen kann als herkömmliches Abwasser.

Bevorzugt erfolgt das Aufkonzentrieren mit Hilfe eines Jet-Loop-Reaktors. Ein Jet-Loop-Reaktor besteht aus einer starken Einströmvorrichtung (Jet) für die aufzukonzentrierende Flüssigkeit, und einer Vorrichtung, um das einströmende Medium im Kreis zu führen. Im einfachsten Aufbau umfasst der Jet-Loop-Reaktor ein Außenrohr und ein in diesem angeordnetes Innenrohr. Die Flüssigkeit wird dabei in einem Treibstrahl zum Reaktorboden und innerhalb des Reaktors im Kreis geführt. Dabei ist sowohl eine Rückführung im Innenrohr als auch eine Rückführung zwischen Innenrohr und Außenrohr möglich. Auch eine äußere Zirkulation und Rückführung über Pumpen ist möglich. Zugesetztes Gas, insbesondere Luft, kann sowohl im oberen als auch im unteren Teil des Reaktors zugegeben werden. In weiteren Ausführungsformen wird eine zusätzliche Energiequelle eingesetzt, um eine innere Zirkulation des gewählten Reaktionsmediums zu verstärken. Jet-Loop-Reaktoren sind im Vergleich zu herkömmlichen Strippungseinrichtungen vorteilhaft, dass hier keine Füllkörper oder Zwischenplatten notwendig sind, um die Kontaktfläche zwischen Luft und Flüssigkeit zu erhöhen, sowie eine Reduzierung des notwendigen Lufteintrags und eine geringere Bauhöhe.

Es hat sich herausgestellt, dass Jet-Loop-Reaktoren insbesondere für ein Aufkonzentrieren von Ammoniak geeignet sind, da hier beispielsweise die NH₃-Diffusionsrate signifikant erhöht ist. Gleichwohl ist aber auch der Einsatz eines herkömmlichen Strippungsverfahrens möglich. In einer weiteren Ausführungsform umfasst das Aufkonzentrieren daher ein Strippen des mindestens einen Abwasserinhaltsstoffs aus einem Abwasser in ein Trägergas umfasst, und eine Regeneration des mindestens einen Abwasserinhaltsstoffs aus dem beladenen Trägergas zu belastetem Wasser, insbesondere in einer Wäscherkolonne.

Strippen, auch als Strippung oder Stripping bezeichnet, ist ein physikalisches Trennverfahren, bei dem Stoffe aus einer flüssigen Phase durch Desorptionsvorgänge (unter Ausnutzung des Henryschen Gesetzes) in die Gasphase überführt werden. Dazu wird die Flüssigphase im Gegenstromprinzip mit einem Gas in Kontakt gebracht. Für eine möglichst effiziente Strippung muss in einer Flüssigkeit der zu überführende Stoff möglichst vollständig in der flüssigen Phase vorliegen, beispielsweise muss also für eine Ammoniakstrippung das in der Flüssigkeit vorhandenes Ammonium nahezu vollständig als Ammoniak vorliegen. Dies kann mit einer Anpassung von Temperatur und pH-Wert erreicht werden. Das Strippgas kann abhängig von Temperatur und Druck nur mit einer bestimmten Konzentration an Ammoniak beladen werden. Die Gleichgewichtskonzentration im Gas ist proportional zur Konzentration der flüssigen Phase in der Flüssigkeit. Die Strippung läuft beispielsweise folgendermaßen ab: Die Flüssigkeit (die die flüssige Phase des Abwasserinhaltsstoffs beinhaltet) wird von oben in eine Kolonne geleitet und über ein Verteilsystem nach unten in den Kolonnensumpf geführt. Dort sammelt sich das Reinwasser. Ein Trägergas wird von unten in die Kolonne eingetragen und im Gegenstrom zur Flüssigkeit geführt. Als Medium kann dabei beispielsweise Luft (Luftstrippung) oder Dampf (Dampfstrippung) verwendet werden. Eine möglichst große Stoffaustauschfläche begünstigt den Übergang von der flüssigen in die gasförmige Phase. Dafür werden verschieden Füllkörper, üblicherweise aus Kunststoff, eingesetzt. Das verwendete Material ist insbesondere unempfindlich gegenüber Verschmutzungen und Ablagerungen durch Ausfällungen sein.

Bevorzugt ist das Strippen durch Dampf- oder Lufteintrag. Die Dampfstrippung bei einer Ammoniakstrippung benötigt eine größere Wärmeenergie und NaOH als Zugabe um den pH-Wert in den NH₃-Bereich zu schieben, hierüber können beispielsweise 90% der NH₄-Last entnommen werden. In den meisten Anwendungsfällen steht ohnehin Prozessabwärme aus anderen Bereichen zur Verfügung, die hier eingesetzt werden kann.

Bei der Luftstrippung genügt in vielen Fällen, insbesondere bei einer Ammoniakstrippung die Abwärme (z.B. 70-75 Grad) - z.B. vom BHKW - um 75% der NH₄-Last zu entfernen ohne Laugenzugabe. Die zurückgebliebenen 25% NH₄ können beispielsweise als leichter Dünger über einen größeren Zeitraum auf die Felder gebracht werden.

Die Regeneration kann beispielsweise bei der Luft- und Dampfstrippung in einer Wäscher-Kolonne mit Säure als Waschlösung erfolgen. Hier entsteht beispielsweise bei einer Ammoniakstrippung ein Kristallbrei als belastetes Wasser, der dann aus der Wäscher-Kolonne ausgeschleust wird.

Bevorzugt wird Wasser als Waschlösung in einer Wäscher-Kolonne eingesetzt. Hierüber kann belastete Wasser mit einer hohen Konzentration des Abwasserinhaltsstoffes erzeugt werden ohne dass durch die Zugabe beispielsweise einer Säure weitere Belastungen des Wassers entstehen. Zusätzlich kann nach der Reinigung das gereinigte Wasser auch im Kreislauf geführt werden und somit nach der Reinigung wieder als Waschlösung eingesetzt werden, somit dient es als Transportmedium für den mindestens einen Abwasserinhaltsstoff.

Es ist weiterhin vorteilhaft, wenn vor der Strippung die Flüssigkeit gefiltert wird, um grobe Verunreinigungen zu vermeiden.

Bevorzugt ist der Abwasserinhaltsstoff Ammoniak oder Ammonium. Das Strippen ist dann eine Ammoniakstrippung oder es erfolgt eine Aufkonzentration von Ammoniak mittels eines Jet-Loop-Reaktors. Insbesondere bei der Ammoniakstrippung ist es vorteilhaft, Ammoniumverbindungen gelöst in Wasser als Waschlösung bei der Regeneration einzusetzen.

Des Weiteren kann, insbesondere bei der Ammoniakstrippung oder einer Aufkonzentration von Ammoniak im Jet-Loop-Reaktor in einer Vorbehandlung das Dissoziationsgleichgewicht durch eine Erhöhung des pH-Wertes in Richtung des Ammoniaks verschoben. Dies kann durch die Zugabe einer Lauge, üblicherweise Natronlauge (NaOH) oder Kalkmilch (Ca(OH)2), erreicht werden. Beim Ammoniakstrippen in einem Temperaturbereich von 75 bis 80 °C kann auf die Zugabe einer Lauge verzichtet werden. Bei Flüssigkeiten mit einem hohem CO2-Gehalt, zum Beispiel das Trübwasser nach einer Biogasanlage, die eine erhebliche Pufferwirkung besitzen, kann als weitere Vorbehandlung vor der Ammoniakstrippung die Flüssigkeit durch eine vorgeschaltete CO₂-Strippung oder bei Verwendung eines Jet-Loop-Reaktors in einem Verfahrensschritt dekarbonisiert werden und der pH-Wert auf 8,0 - 8,5 erhöht und damit der Einsatz von Laugen ebenfalls reduziert werden.

In einer Ausführungsform des Verfahrens umfasst das Bereitstellen des belasteten Wassers derart, dass das belastete Wasser, insbesondere wenn das belastete Wasser durch ein Aufkonzentrieren, insbesondere eine Strippung erzeugt wurde, zunächst in mindestens einem Transportbehälter gesammelt wird, im Transportbehälter transportiert wird und das belastete Wasser aus dem Transportbehälter bereitgestellt wird. Abwässer im Sinne dieser Erfindung fallen beispielsweise in Klärwerken, auf Deponien oder in Biogasanlagen an. Die im Rahmen der Reinigung freigesetzten Bestandteile des Abwasserinhaltsstoffs wie Wasserstoff werden jedoch nicht zwangsläufig an diesen Orten benötigt, sondern beispielsweise im Fall des Wasserstoffs an Tankstellen, Blockheizkraftwerken oder dergleichen.

Gerade aufkonzentriertes belastetes Wasser lässt sich leicht und ohne starke Sicherheitsmaßnahmen transportieren, so dass es über diese Ausführungsform des Verfahrens möglich ist, die eigentliche Reinigung und damit die Gewinnung der wertvollen Bestandteile wie Wasserstoff direkt an einer Tankstelle durchzuführen und dort die Bestandteile zur weiteren Verwendung zur Verfügung zu stellen ohne dass die Bestandteile in reiner Form, insbesondere als Gase transportiert werden müssen, was deutlich größere Probleme mit sich bringt als der Transport von Flüssigkeiten.

Damit dient das belastete Wasser auch als Wasserstoffspeicher und kann verlustfrei über große Zeiträume gelagert, mit hoher Energiedichte transportiert und verteilt werden. Am Ort und zur Zeit des Energiebedarfs kann durch den Plasmaprozess sehr energieeffizient der Wasserstoff aus dem belasteten Wasser freigesetzt und das belastete Wasser gereinigt werden. Soweit dabei auch Stickstoff freigesetzt wird, kann dieser anschließend beispielsweise als Industriegas seinen Einsatz finden.

Der mindestens eine Abwasserinhaltsstoff ist bevorzugt ausgewählt aus der Gruppe der Stickstoffverbindungen, insbesondere der Stickstoff-Wasserstoffverbindungen, der Kohlenstoffverbindungen, der Bor-, Sauerstoff-, Phosphor-, Schwefel- oder Chlor-Verbindungen. Auch Hormone oder Medikamentenrückstände können Abwasserinhaltsstoffe im Sinne dieser Anmeldung sein, sofern sie mindestens eine Verbindung mit einer geringeren Bindungsenergie als die der einfachen Wasserstoff-Sauerstoff-Bindung aufweisen. Damit ermöglicht die erfindungsgemäße Wasserreinigung es, eine sehr große Bandbreite von Abwasserinhaltsstoffen zu entfernen ohne spezifische Verfahren für jeden Inhaltsstoff einsetzen zu müssen.

Es hat sich gezeigt, dass insbesondere Schmerzmittel wie Diclofenac, die Antiepileptika Carbamazepin und Gabapentin, Betablocker sowie Antibiotika mit dem erfindungsgemäßen Verfahren sehr gut spaltbar und damit aus dem Abwasser zu entfernen sind.

Die nachfolgende Tabelle gibt einen Überblick über gängige Verbindungen, die in Abwasserinhaltsstoffen vorkommen und eine geringere Bindungsenergie, auch Bindungsenthalpie, als die einfache Wasserstoff-Sauerstoff-Bindung aufweisen.

**Tabelle 1 Bindungsenthalpie ΔH in kJ pro mol verschiedener Verbindungen**

| mit Wasserstoff | | mit Kohlenstoff | | mit Sauerstoff | | gleiches Element | |
|---|---|---|---|---|---|---|---|
| Bindung | Δ*H* | Bindung | Δ*H* | Bindung | Δ*H* | Bindung | Δ*H* |
| H-H | 436 | | | O-N | 201 | H-H | 436 |
| H-C | 413 | C-C | 348 | O-P | 335 | N-N | 163 |
| ***H-O*** | ***463*** | C-H | 413 | O-F | 193 | N=N | 418 |
| H-N | 391 | C-O | 358 | O-Cl | 208 | O-O | 146 |
| H-P | 322 | C-N | 305 | O-Br | 234 | P-P | 172 |
| H-S | 367 | C-P | 264 | O-I | 234 | S-S | 255 |
| H-Cl | 431 | C-S | 272 | | | | |
| H-Br | 366 | C-Cl | 339 | | | | |
| H-I | 298 | C-Br | 285 | | | | |
| | | C-I | 218 | | | | |

Wie der Tabelle 1 zunehmen ist, ist eine Vielzahl von Wasserstoff-Verbindungen mit einer geringeren Bindungsenergie als diejenige der Wasserstoff-Sauerstoff-Bindung ausgestattet, so dass vorteilhaft als Nebenprodukt der Wasserreinigung auch verstärkt Wasserstoff freigesetzt wird. Vorteilhaft umfasst der Abwasserinhaltsstoff Ammonium NH4+ oder Ammoniak NH3. Die Dissoziation dieser Verbindungen bringt eine besonders hohe Wasserstoff- und Stickstoffausbeute, die bevorzugte Nebenprodukte der erfindungsgemäßen Wasserreinigung darstellen. Es hat sich im Rahmen der Erfindung gezeigt, dass über die durch die geringere Bindungsenergie im Vergleich zur Dissoziation von Wasser begünstigte Dissoziation von Wasserstoff-Stickstoff-Verbindungen mit einfacher Wasserstoff-Stickstoff-Bindung, diese nicht nur aus dem belasteten Wasser entfernt werden können, sondern auch eine höhere Wasserstoffausbeute anfällt als bei der Dissoziation gereinigten Wassers. Somit kann über das erfindungsgemäße Verfahren auch kostengünstig Wasserstoff als Nebenprodukt erzeugt werden. Umfasst der Abwasserinhaltsstoff Ammonium oder Ammoniak hat es sich als besonders vorteilhaft erwiesen, wenn der Abstand zwischen Plasmaelektrode und der Füllhöhe des belasteten Wassers nicht zu klein gewählt wird. Hier ist es besonders vorteilhaft, wenn der Abstand in einem Bereich zwischen 1,5 und 2 cm liegt.

Vorteilhaft wird zum Beaufschlagen der Plasmaelektrode mit der hochfrequenten Wechselspannung ein Hochfrequenzgenerator mit vorbestimmter Ausgangsimpedanz eingesetzt, der mit der Plasmaelektrode über ein Anpassungsnetzwerk zur Impedanzanpassung einer Impedanz des Plasmas und der Ausgangsimpedanz des Hochfrequenzgenerators verbunden ist. Ein Plasma besitzt eine von zahlreichen äußeren Parametern (z.B. vom ablaufenden plasmachemischen Prozess) abhängige, zeitlich variable und daher von der Ausgangsimpedanz des Generators in der Regel verschiedene komplexe Impedanz. Die Impedanz des Plasmas ist insbesondere abhängig vom Abstand der Plasmaelektrode zur Wasseroberfläche, Wasserzusammensetzung, Temperatur im Reaktionsraum sowie der Atmosphäre im Reaktionsraum. Vorteilhaft wird daher ein sogenanntes Anpassungsnetzwerk (auch Matching Network oder Matchbox) als Bindeglied zwischen Hochfrequenzgenerator und Gasentladung eingesetzt, das die ohmschen und kapazitiven Anteile des Plasmas mit der vom Generator vorgegebenen Impedanz in Übereinstimmung bringt, also die veränderliche Last des Plasmas an den Innenwiderstand des Generators anpasst und somit eine Reflexion von Energie aus dem System minimiert.

Dies kann beispielsweise realisiert sein, indem eine Intensität und Leistung einer hin- und einer rücklaufenden Welle zum Hochfrequenzgenerator gemessen wird und in Abhängigkeit der Leistung der hinlaufenden Welle die Generatorleistung stabilisiert wird und die Leistung der rücklaufenden Welle abhängig von einer Leitfähigkeit oder dem pH-Wert des belasteten Wassers über das Anpassungsnetzwerk minimiert wird. Entsprechend der Leitfähigkeit oder dem pH-Wert des Wassers, die sich auch mit fortschreitender Reinigung ändert, werden Kondensator und Spule verändert.

Bevorzugt weist die hochfrequente Wechselspannung eine Frequenz im Bereich von 1 bis 40 MHz, insbesondere im Bereich von 10 bis 20 MHz, auf und/oder die Plasmaelektrode wird mit einer Leistung im Bereich von 100 W bis 40 kW, bevorzugt im Bereich von 1 bis 5 kW beaufschlagt. In diesen Bereichen liefert das Verfahren eine hohe Ausbeute von gereinigtem Wasser bei optimiertem Energieeintrag.

In einer weiteren Ausführungsform umfasst das Verfahren weiter die Schritte
- Sammeln von durch die Dissoziation entstehenden Gasen in einer gemeinsamen Abgasleitung,
- Trennen der entstehenden Gase über einen mehrstufigen Membranprozess und/oder über die Verwendung selektiver Adsorptionsverfahren.

Gase wie Wasserstoff, Sauerstoff, Stickstoff, CO2 oder auch Methan stellen erwünschte mögliche Nebenprodukte der Wasserreinigung dar. In dieser Ausführungsform ist eine Trennung der entstehenden Gase und damit auch die Sammlung der erwünschten Nebenprodukte getrennt voneinander einfach möglich.

Bei einem selektiven Adsorptionsverfahren wird z.B. das Wasserstoff-Sauerstoff-Gemisch über ein Reservoir geleitet, in dem sich mindestens ein Adsorber befindet, an diesem wird bevorzugt der Sauerstoff über Adsorption gebunden. Der Wasserstoff wird somit zunächst alleine freigesetzt. Der adsorbierte Sauerstoff kann dann in einem weiteren Schritt vom Adsorber gelöst werden, beispielsweise über eine Druckbeaufschlagung oder ein thermisches Lösen.

Als Adsorber werden bevorzugt keramische Werkstoffe mit großer Oberfläche und hoher Adsorptionskapazität für Sauerstoff verwendet, insbesondere sogenannte Molekularsiebe. Neben Zeolithen, also kristallinen Alumosilikaten können dies auch Kohlenstoffmolekularsiebe sein. Bevorzugt können Kieselgel (Silica-Gel) oder aktiviertes Aluminiumoxid eingesetzt werden.

Dem Wasserreservoir wird bevorzugt kontinuierlich belastetes Wasser zugegeben. Darüber kann die Füllhöhe und damit der Abstand zur Plasmaelektrode weitgehend konstant gehalten werden. Das verringert den Regulationsaufwand bei der Plasmaerzeugung, beispielsweise über ein Anpassungsnetzwerk.

In einer vorteilhaften Ausführung ist die Plasmaelektrode mit einem Dielektrikum beschichtet und das Plasma wird als Barrierenentladung ausgebildet. Dielektrisch behinderte Entladungen, auch Barrierenentladungen (dielectric barrier discharges, DBDS) genannt, entstehen, wenn zwei Elektroden, im vorliegenden Fall die Plasmaelektrode und das Wasser, das selbst eine bestimmte Impedanz aufweist, aber nicht über eine Elektrode oder eine Erdung verfügt durch mindestens einen Isolator, beispielsweise ein Dielektrikum voneinander trennt. Die Barrierenentladung besteht in der Regel aus kurzlebigen filamentären Mikroentladungen bei geringem Entladungsstrom. Sie begrenzt die durch die Entladung transportierte elektrische Aufladung, d.h. sie begrenzt den Stromfluss im System und verteilt die Entladung über die Elektrodenfläche. Die Ausbeute an gereinigtem Wasser kann über eine Maximierung der Fläche an Mikroentladungen bei bestimmter Frequenz, Temperatur und Impedanz positiv beeinflusst werden. Durch das Dielektrikum auf der Plasmaelektrode wird das Rekombinieren der Ladungsträger mit der Elektrode verhindert und die Dissoziationseffizienz erhöht.

Als Dielektrikum wird bevorzugt ein keramischer Werkstoff, insbesondere ein solcher, der Aluminiumoxid oder Titandioxid umfasst, eingesetzt.

In einer Ausführungsform wird im Rahmen eines Startprozesses, also beim Zünden des Plasmas, als Atmosphäre im Reaktionsraum Luft, Ar, He, N oder Ne eingesetzt.

Bevorzugt weist das Wasser im Wasserreservoir eine Temperatur im Bereich von 3 bis 99°C auf, in diesem Temperaturbereich ist das Wasser flüssig. Weiter bevorzugt für die Abwasserreinigung ist ein Bereich von 3 bis 25°C, insbesondere von 5 bis 25°C in diesem sind die Wirkungsgrade besonders hoch.

Die Plasmaelektrode wird in einer Ausführungsform auf eine Temperatur im Bereich von 60 bis 70 °C gekühlt.

In einer Weiterbildung umfasst das belastete Wasser mindestens eine Kohlenstoffverbindung als Abwasserinhaltsstoff. Dann ist es vorteilhaft wenn das Verfahren, die folgenden Schritte zusätzlich umfasst:
- Sammeln von durch die Dissoziation entstehenden Gasen in einer gemeinsamen Abgasleitung
- Messung einer Methankonzentration in der gemeinsamen Abgasleitung
- Aufrechterhaltung der Beaufschlagung bis eine Mindestkonzentration von Methan in der Abgasleitung erreicht ist.

Werden Kohlenstoffverbindungen in den Abwasserinhaltsstoffen im Rahmen des Plasmaprozesses dissoziiert, wird Kohlenstoff freigesetzt, der zunächst zu Kohlenmonoxid oder Kohlendioxid beispielsweise mit Sauerstoff aus der latent vorhandenen Wasserdissoziation oder anderen Dissoziationsreaktionen reagiert. Ist eine ausreichende Kohlenmonoxid- oder Kohlendioxidmenge vorhanden, findet begünstigt vom Plasma eine Reaktion mit dem ebenfalls mindestens aus der latenten Wasserdissoziation vorhandenen Stickstoff zu Methan statt. Bevorzugt liegt gleichzeitig eine Wasserstoff-Stickstoffverbindung als Abwasserinhaltstoff vor, so dass größere Mengen an Wasserstoff für die Methanisierung frei werden. Methan ist ein erwünschtes Nebenprodukt der Wasserreinigung und kann alleine oder zusammen mit ebenfalls entstehendem Wasserstoff als Treibstoff genutzt werden.

Vorteilhaft ist im Wasser eine Sauerstoffverbindung als weiterer Abwasserinhaltsstoff vorhanden.

Verschiedene Parameter begünstigen die Methanisierung bei gleichzeitig dennoch vorhandener Reinigungsleistung des Prozesses. Je nach Fokussierung kann die Beaufschlagung dann nach der Produktion gewünschter Methanmengen oder schnellerer Reinigung ausgerichtet werden.

Zur Förderung der Methanisierung wird die Plasmaelektrode bevorzugt auf eine Temperatur im Bereich von 80 bis 90 °C gekühlt. Weiterhin ist es vorteilhaft, wenn ein Katalysator zur Methanisierung von Kohlenmonoxid und/oder Kohlendioxid eingesetzt wird.

Für die Methanisierung von CO₂ und CO kommen verschiedene Katalysatoren und Katalysatorsysteme in Frage, insbesondere auch Kombinationen aus aktiven Komponenten, Substraten und Promotern. Als aktive Komponente dienen vorzugsweise Übergangsmetalle, wobei vor allem Nickel, Ruthenium, aber auch Kobalt oder Eisen gute Katalysatoren bilden. Besonders bevorzugt sind Ni/Al₂O₃ und andere Ni-Systeme für die CO-Methanisierung sowie Ni, Ru, Co auf verschiedenen Substraten, beispielsweise Al₂O₃, SiOz, TiOz, ZrO₂ oder CeO₂ oder der Asche von Reishülsen, für die COz-Methanisierung.

Die Methanisierung erfolgt dabei beispielsweise unterstützt durch einen Katalysator, der als reine (z.B. Nickel-) Plasmaelektrode, als Beschichtung der Plasmaelektrode oder als Schüttung oder Schaum in einer Katalysatorkammer in der Plasmaelektrode oder in der Abgasleitung realisiert sein kann. Die Beschichtung ist in einer Ausführungsform eine reine Katalysatorschicht, beispielsweise Ni, auf der Plasmaelektrode, als Nickel-Elektrodenmesh, oder der Katalysator ist als Zusatzstoff Bestandteil einer dielektrischen Beschichtung der Plasmaelektrode, beispielsweise einer Al₂O₃Ni-Schicht. Auch Ruthenium kann als Katalysator beispielsweise als 5%ige Beimischung in einer mit Al₂O₃-Beschichtung der Elektrode eingesetzt werden. Alternativ liegt der Katalysator als Katalysatorpulver/-Granulat oder offenporiger Schaum in einer Kammer der Plasmaelektrode vor. Diese Kammer ist dann durchströmbar ausführt und die Plasmaelektrode weist entsprechende Öffnungen auf. Schließlich kann der Katalysator auch in einer Kammer in oder an der Abgasleitung als Pulver, Granulat oder offenporiger Schaum angeordnet sein.

Zur Förderung der Methanisierung kann als Atmosphäre im Reaktionsraum im Rahmen eines Startprozesses CO₂ und/oder CO eingesetzt werden, damit steht von Beginn an CO₂ und/oder CO zur Methanisierung zur Verfügung, die Startphase der Methanisierung wird somit verkürzt.

Es ist weiterhin vorteilhaft, wenn anschließend Methan über mindestens eine weitere Membran oder ein selektives Adsorptionsverfahren abgetrennt wird, so dass reines Methan zur weiteren Nutzung zur Verfügung steht oder dieses entsprechend den Anforderungen an einen Methan-Wasserstoff-Treibstoff gezielt in einem vorbestimmten Verhältnis mit Wasserstoff gemischt werden kann. Als Adsorber wird hier beispielsweise ZSM-5, Zeolite Socony Mobil-5, ein synthetischer high-silica Alumosilicat-Zeolith eingesetzt.

Gemäß einer weiteren Weiterbildung wird über die Einstellung einer Temperatur im Bereich von weniger als 70 Grad und bei Verwendung einer Plasmaelektrode aus Aluminium oder Stahl und/oder mit einer Al2O3-Beschichtungaus der Dissoziation von Kohlenstoffverbindungen im belasteten Wasser entstehenden Kohlendioxids sowie Wasserstoffs im Reaktionsraum die Bildung von Methan weitgehend unterdrückt, sodass abgeführtes Kohlendioxid und Wasserstoff unter Zuführung von Strom und Wärme in einer inversen CO-shift Kompression zu Kohlenmonoxid umgesetzt werden können. Das entstehende Kohlenmonoxid wird dann mit weiterem Wasserstoff aus der Reinigung einer Fischer-Tropsch-Synthese zugeführt und anschließend wiederum zusammen mit weiterem Wasserstoff aus der Reinigung über Hydrocracking, Isomerisierung oder Destillation zu Benzin, Kerosin oder Diesel umgesetzt. Alternativ kann auch direkt aus dem Reinigungsprozess entstehendes Kohlenmonoxid verwendet werden.

Gemäß einem zweiten Aspekt betrifft die Erfindung eine Vorrichtung zur Reinigung von mit mindestens einem Abwasserinhaltsstoff belastetem Wasser umfassend:
in einem Reaktionsraum
- ein ungeerdetes Wasserreservoir;
- genau eine flächig ausgebildete, gekühlte Plasmaelektrode, die in einem vorbestimmten Abstand über einer Füllhöhe des Wasserreservoirs angeordnet ist,
- einen Sensor zum Erfassen einer Konzentration des Abwasserinhaltsstoffs und außerhalb des Reaktionsraumes
- einen Hochfrequenzgenerator mit vorbestimmter Ausgangsimpedanz, der mit der Plasmaelektrode über ein Anpassungsnetzwerk zur Impedanzanpassung einer Impedanz eines an der Plasmaelektrode entstehenden Plasmas und der Ausgangsimpedanz des Hochfrequenzgenerators verbunden ist.

Vorteilhaft wird ein sogenanntes Anpassungsnetzwerk (auch Matching Network oder Matchbox) als Bindeglied zwischen Hochfrequenzgenerator und Plasma eingesetzt, das die ohmschen und kapazitiven Anteile des Plasmas mit einer vom Generator vorgegebenen Ausgangsimpedanz in Übereinstimmung bringt. Die Impedanz des Plasmas ist insbesondere abhängig vom Abstand der Plasmaelektrode zur Wasseroberfläche, Wasserzusammensetzung, der Beschaffenheit eines Gehäuses um den Reaktionsraum, Temperatur im Reaktionsraum sowie der Atmosphäre im Reaktionsraum.

Die Vorrichtung teilt im Übrigen die Vorteile und Ausführungsformen des Verfahrens gemäß dem ersten Aspekt der Erfindung.

In einer Ausführungsform umfasst der Hochfrequenzgenerator eine Messeinrichtung zum Messen einer Intensität und einer Leistung einer hin- und einer rücklaufenden Welle. Es ist dabei besonders bevorzugt, wenn die Messeinrichtung einen Richtkoppler und zwei Detektoren im Hochfrequenzgenerator umfasst.

Bevorzugt beträgt die Ausgangsimpedanz des Hochfrequenzgenerators 50 Ohm und/oder eine Ausgangsleistung des Hochfrequenzgenerators zwischen 100 W und 40 kW. Es hat sich gezeigt, dass insbesondere bei dieser Ausgangsimpedanz besonders zuverlässig ein Plasma bei gleichzeitig guter Reinigungsleistung ausgebildet wird.

Vorteilhaft umfasst das Anpassungsnetzwerk mindestens einen motorgesteuerten Kondensator und mindestens eine variable Spule. Diese bilden zusammen einen elektrischen Schwingkreis, über den die Impedanzanpassung kontinuierlich auch auf schwankende Lasten durch das Plasma reagieren kann. Die Abstimmung der Kondensatoren und Spulen erfolgt in einer weiteren Ausführungsform automatisch über eine Reflexion- und Stehwellenregelkreismethode.

Bevorzugt ist am Reaktionsraum eine gemeinsame Abgasleitung für entstehende Gase angeordnet. Es ist dabei zur Gewinnung unterschiedlicher Gase insbesondere vorteilhaft, wenn in der gemeinsamen Abgasleitung oder an einem Ende der gemeinsamen Abgasleitung eine Mehrzahl von Membranen und/oder Adsorber zur Trennung von entstehenden Gasen angeordnet sind.

Die Abgasleitung ist dabei in einer Ausführungsform in der Plasmaelektrode angeordnet, d. h. die Plasmaelektrode weist mindestens eine Öffnung auf zum Reaktionsraum hin auf sowie zumindest einen Teil der Abgasleitung.

Bevorzugt werden dabei Polymermembranen, beispielsweise zur Trennung von Wasserstoff und Sauerstoff, eingesetzt. Alternativ ist in der gemeinsamen Abgasleitung oder an einem Ende der gemeinsamen Abgasleitung ein Reservoir angeordnet, in dem sich mindestens ein Adsorber befindet, beispielsweise in Form einer Schüttung oder eines offenporigen Schaumes. Der Adsorber zur Trennung von Wasserstoff und Sauerstoff ist vorteilhaft derart ausgebildet, dass Sauerstoff an ihm bevorzugt über Adsorption gebunden wird. Es können aber auch Kombinationen von Membranen und Adsorber für die unterschiedlichen entstehenden Gase eingesetzt werden. Polymermembranen trennen gut CO2 und CH4 und N2 aber auch beispielsweise Zeolithe wie ZSM-5, ein synthetischer high-silica" Alumosilicat-Zeolith können hier eingesetzt werden.

In einer Weiterbildung ist am Reservoir eine Vorrichtung zum Lösen des adsorbierten Sauerstoffs vorhanden. Diese kann beispielsweise in Form einer Heizung zum thermischen Lösen des Sauerstoffs oder in Form einer Vakuumpumpe zur Beaufschlagung mit Unterdruck ausgebildet sein. Das Reservoir kann aber auch eine verschließbare Öffnung aufweisen, über die der beladene Absorber nach der Adsorption gegen einen unbeladenen ausgetauscht werden kann.

Als Adsorber werden bevorzugt keramische Werkstoffe mit großer Oberfläche und hoher Adsorptionskapazität für Sauerstoff verwendet, insbesondere sogenannte Molekularsiebe. Neben Zeolithen, also kristallinen Alumosilikaten können dies auch Kohlenstoffmolekularsiebe sein. Bevorzugt können Kieselgel (Silica-Gel) oder aktiviertes Aluminiumoxid eingesetzt werden. In einer Ausführungsform weist die Plasmaelektrode ein Metall, insbesondere Aluminium, auf, dieses wird auf Grund der guten Leitfähigkeit bei relativ geringen Kosten bevorzugt.

Vorteilhaft ist die Plasmaelektrode mit einem Dielektrikum, insbesondere umfassend Aluminiumoxid und/oder Nickel und/oder Titandioxid, beschichtet. Dies erlaubt die Ausbildung des Plasmas über eine Barrierenentladung. Bevorzugt weist das Dielektrikum eine Schichtdicke von 200 bis 1000 µm auf.

Bevorzugt weist die Vorrichtung mindestens eine Zuführung für mindestens ein Gas in den Reaktionsraum, insbesondere für Luft, Ar, He, Ne, N, CO und/oder CO₂, auf.

In einer Ausführungsform bildet eine Plasmaelektrodenanordnung aus mehreren nebeneinander angeordneten Einzelelektroden im vorbestimmten Abstand über dem Wasserreservoir die genau eine Plasmaelektrode. Über diese Ausführungsform kann der Energieeintrag optimiert werden und gleichzeitig der Fertigungs- und Kühlaufwand verbessert werden im Vergleich zu einer einstückigen Plasmaelektrode gleicher Fläche.

Jede Einzelelektrode ist in dieser Ausführungsform mit dem Hochfrequenzgenerator verbunden. Alternativ können aber auch mehrere Hochfrequenzgeneratoren mit vorbestimmter Ausgangsimpedanz verwendet werden, von denen jeder mit einer Einzelelektrode oder einer Gruppe von Einzelelektroden über ein jeweiliges Anpassungsnetzwerk zur Impedanzanpassung einer Impedanz eines an der jeweiligen Einzelelektrode oder der Gruppe von Einzelelektroden entstehenden Plasmas und der Ausgangsimpedanz des Hochfrequenzgenerators verbunden ist.

Bevorzugt verfügt das Wasserreservoir über einen Zulauf und mindestens einen Ablauf. Weiterhin ist es bevorzugt, wenn der Sensor ist im Bereich des mindestens einen Ablaufs angeordnet ist. Damit ermöglicht das Wasserreservoir einen kontinuierlichen Prozess, in dem kontinuierlich belastetes Wasser zugegeben wird und gereinigtes Wasser über den Ablauf entnommen wird. Die Entnahme kann vom Messergebnis des Sensors, also vom tatsächlichen Reinigungsgrad abhängig gemacht werden. Hierzu kann beispielsweise am Ablauf ein Ventil angeordnet sein, dass nur bei unterschreiten des Grenzwertes im Bereich des Sensors geöffnet wird.

In einer weiteren Ausführungsform umfasst das Wasserreservoir eine Füllstandsregelung, die ausgebildet ist, die Füllhöhe des Wassers nahezu konstant zu halten, oder einen Überlauf. Die Füllhöhe liegt bevorzugt im Bereich von 1,5 bis 10 cm.

Für eine möglichst vollständige Reinigung des Wasservolumens im Wasserreservoir liegt ein Abstand der Plasmaelektrode zu jeder Wand des Reaktionsraumes im Bereich von 1 bis 2 cm. Vorteilhaft zur Behandlung großer Wassermengen ist ein Flächenmaß der Plasmaelektrode zwischen 15 cm² und 450 cm².

Weiterhin ist es bevorzugt, wenn der vorbestimmte Abstand zwischen Plasmaelektrode und Füllhöhe des Wasserreservoirs in einem Bereich von 0,2 bis 2 cm, weiter bevorzugt im Bereich von 1 bis 2 cm, liegt.

Steht die Gewinnung von Methan absolut im Vordergrund kann auch der Schritt des Erfassens der Konzentration des mindestens einen Abwasserinhaltsstoffs entfallen. Gemäß einem dritten Aspekt betrifft die Erfindung daher ein Verfahren zur Methangewinnung aus mit mindestens einem Abwasserinhaltsstoff belastetem Wasser, wobei der Abwasserinhaltsstoff mindestens eine Kohlenstoffverbindung mit einer Bindungsenergie aufweist, die geringer ist als die Bindungsenergie einer einfachen Wasserstoff-Sauerstoffbindung.

Das Verfahren gemäß dem dritten Aspekt umfasst dann die Schritte:
- Bereitstellen des belasteten Wassers mit einer vorbestimmten Füllhöhe in einem ungeerdeten Wasserreservoir innerhalb eines Reaktionsraumes;
- Beaufschlagen genau einer in einem vorbestimmten Abstand über der Füllhöhe des Wasserreservoirs angeordneten flächig ausgebildeten, gekühlten Plasmaelektrode mit einer hochfrequenten Wechselspannung bei Atmosphärendruck, derart, dass sich im Hochfrequenzfeld zwischen der Plasmaelektrode und einer Oberfläche des Wassers ein Plasma ausbildet, dessen Energieeintrag ausreichend ist, dass Verbindungen mit einer Bindungsenergie, die kleiner oder gleich derjenigen der einfachen Wasserstoff-Sauerstoff-bindung ist, dissoziiert werden;
- Sammeln von durch die Dissoziation entstehenden Gasen in einer gemeinsamen Abgasleitung
- Messung einer Methankonzentration in der gemeinsamen Abgasleitung
- Aufrechterhaltung der Beaufschlagung bis eine Mindestkonzentration von Methan in der Abgasleitung erreicht ist.

Dieser Aspekt der Erfindung geht von der Erkenntnis aus, dass aus Abwasserinhaltsstoffen freigesetzter Kohlenstoff und Wasserstoff im Plasmaprozess zu Methan umgesetzt werden. Werden Kohlenstoffverbindungen in den Abwasserinhaltsstoffen im Rahmen des Plasmaprozesses dissoziiert, wird Kohlenstoff und Sauerstoff freigesetzt, der zunächst zu Kohlenmonoxid oder Kohlendioxid beispielsweise mit Sauerstoff aus der latent vorhandenen Wasserdissoziation oder anderen Dissoziationsreaktionen reagiert. Ist eine ausreichende Kohlenmonoxid- und/oder Kohlendioxidmenge, beispielsweise mindestens 10% Kohlendioxid vorhanden, findet begünstigt vom Plasma eine Reaktion mit dem ebenfalls mindestens aus der latenten Wasserdissoziation vorhandenen Wasserstoff zu Methan statt. Wasserstoff sollte dabei in einer Konzentration von mindestens 30% vorliegen. Methan ist also nicht nur ein erwünschtes Nebenprodukt der Wasserreinigung, vielmehr liegt bei diesem Aspekt der Erfindung der Fokus auf der kostengünstigen Gewinnung von Methan, das in der Folge alleine oder beispielsweise zusammen mit ebenfalls entstehendem Wasserstoff als Treibstoff genutzt werden. Damit stellt dieser Aspekt der Erfindung ein vergleichsweise unaufwendiges und energieeffizientes sowie kostengünstiges Verfahren zur Methangewinnung dar.

Bevorzugt liegt gleichzeitig eine Wasserstoff-Stickstoffverbindung als Abwasserinhaltstoff vor, so dass größere Mengen an Wasserstoff für die Methanisierung frei werden und damit die Energieeffizienz weiter verbessert wird.

Zur Förderung der Methanisierung wird die Plasmaelektrode bevorzugt auf eine Temperatur im Bereich von 80 bis 90 °C gekühlt. Weiterhin ist es vorteilhaft, wenn ein Katalysator zur Methanisierung von Kohlenmonoxid und/oder Kohlendioxid eingesetzt wird.

Für die Methanisierung von CO₂ und CO kommen verschiedene Katalysatoren und Katalysatorsysteme in Frage, insbesondere auch Kombinationen aus aktiven Komponenten, Substraten und Promotern. Als aktive Komponente dienen vorzugsweise Übergangsmetalle, wobei vor allem Nickel, Ruthenium, aber auch Kobalt oder Eisen gute Katalysatoren bilden. Besonders bevorzugt sind Ni/Al₂O₃ und andere Ni-Systeme für die CO-Methanisierung sowie Ni, Ru, Co auf verschiedenen Substraten, beispielsweise Al₂O₃, SiOz, TiOz, ZrO₂ oder CeO₂ oder der Asche von Reishülsen, für die COz-Methanisierung.

Die Methanisierung erfolgt dabei beispielsweise unterstützt durch einen Katalysator, der als reine (z.B. Nickel-) Plasmaelektrode, als Beschichtung der Plasmaelektrode, als Nickel-Elektrodenmesh, oder als Schüttung oder Schaum in einer Katalysatorkammer in der Plasmaelektrode oder in der Abgasleitung realisiert sein kann. Die Beschichtung ist in einer Ausführungsform eine reine Katalysatorschicht, beispielsweise Ni, auf der Plasmaelektrode oder der Katalysator ist als Zusatzstoff Bestandteil einer dielektrischen Beschichtung der Plasmaelektrode, beispielsweise einer Al2O3Ni-Schicht. Alternativ liegt der Katalysator als Katalysatorpulver/-Granulat oder offenporiger Schaum in einer Kammer der Plasmaelektrode vor. Diese Kammer ist dann durchströmbar ausführt und die Plasmaelektrode weist entsprechende Öffnungen auf. Schließlich kann der Katalysator auch in einer Kammer in oder an der Abgasleitung als Pulver, Granulat oder offenporiger Schaum angeordnet sein.

Zur Förderung der Methanisierung kann als Atmosphäre im Reaktionsraum im Rahmen eines Startprozesses CO₂ und/oder CO eingesetzt werden, damit steht von Beginn an CO₂ und/oder CO zur Methanisierung zur Verfügung, die Startphase der Methanisierung wird somit verkürzt.

Es ist weiterhin vorteilhaft, wenn anschließend Methan über mindestens eine weitere Membran oder ein selektives Adsorptionsverfahren abgetrennt wird, so dass reines Methan zur weiteren Nutzung zur Verfügung steht oder dieses entsprechend den Anforderungen an einen Methan-Wasserstoff-Treibstoff gezielt in einem vorbestimmten Verhältnis mit Wasserstoff gemischt werden kann. Als Adsorber wird hier beispielsweise ZSM-5, Zeolite Socony Mobil-5, ein synthetischer high-silica Alumosilicat-Zeolith eingesetzt.

Das Verfahren gemäß dem dritten Aspekt der Erfindung teilt im Übrigen die Vorteile und Ausführungsformen des Verfahrens gemäß dem ersten Aspekt der Erfindung.

Gemäß einem vierten Aspekt betrifft die Erfindung eine Vorrichtung zur Gewinnung von Methan aus mit mindestens einem Abwasserinhaltsstoff belastetem Wasser umfassend:
in einem Reaktionsraum
   - ein ungeerdetes Wasserreservoir;
   - genau eine flächig ausgebildete, gekühlte Plasmaelektrode, die in einem vorbestimmten Abstand über einer Füllhöhe des Wasserreservoirs angeordnet ist,
und außerhalb des Reaktionsraumes
   - einen Hochfrequenzgenerator mit vorbestimmter Ausgangsimpedanz, der mit der Plasmaelektrode über ein Anpassungsnetzwerk zur Impedanzanpassung einer Impedanz eines an der Plasmaelektrode entstehenden Plasmas und der Ausgangsimpedanz des Hochfrequenzgenerators verbunden ist; sowie
   - eine gemeinsame Abgasleitung am Reaktionsraum und einen darin oder an einem Ende der Abgasleitung angeordneten Sensor zum Erfassen einer Konzentration von Methan.

Die Abgasleitung ist dabei in einer Ausführungsform in der Plasmaelektrode angeordnet, d. h. die Plasmaelektrode weist mindestens eine Öffnung auf zum Reaktionsraum hin auf sowie zumindest einen Teil der Abgasleitung.

Bevorzugt wird ein Katalysator eingesetzt, der beispielsweise als reine (z.B. Nickel-) Plasmaelektrode, als Beschichtung der Plasmaelektrode, als Nickel-Elektrodenmesh, oder als Schüttung oder Schaum in einer Katalysatorkammer in der Plasmaelektrode oder in der Abgasleitung realisiert sein kann. Die Beschichtung ist in einer Ausführungsform eine reine Katalysatorschicht, beispielsweise Ni, auf der Plasmaelektrode oder der Katalysator ist als Zusatzstoff Bestandteil einer dielektrischen Beschichtung der Plasmaelektrode, beispielsweise einer Al2O3Ni-Schicht. Alternativ liegt der Katalysator als Katalysatorpulver/-Granulat oder offenporiger Schaum in einer Kammer der Plasmaelektrode vor. Diese Kammer ist dann durchströmbar ausführt und die Plasmaelektrode weist entsprechende Öffnungen auf. Schließlich kann der Katalysator auch in einer Kammer in oder an der Abgasleitung als Pulver, Granulat oder offenporiger Schaum angeordnet sein.

Die Vorrichtung gemäß dem vierten Aspekt der Erfindung teilt im Übrigen die Vorteile und Ausführungsformen der Vorrichtung gemäß dem dritten Aspekt der Erfindung.

Ausführungsbeispiele sind auch den Ansprüchen zu entnehmen.

Nachfolgend werden weitere Ausführungsbeispiele der Vorrichtung und des Verfahrens anhand der Zeichnungen beschrieben. Es zeigen:
Fig. 1 Eine schematische Darstellung eines Ausführungsbeispiels einer Vorrichtung zur plasmainduzierten Wasserreinigung gemäß dem zweiten Aspekt der Erfindung;
Fig. 2 Eine schematische Darstellung eines weiteren Ausführungsbeispiels einer Vorrichtung zur plasmainduzierten Wasserreinigung gemäß dem zweiten Aspekt der Erfindung;
Fig.3 Eine schematische Darstellung eines Ausführungsbeispiels einer Vorrichtung zur plasmainduzierten Methangewinnung gemäß dem vierten Aspekt der Erfindung;
Fig.4 Eine schematische Darstellung eines weiteren Ausführungsbeispiels einer Vorrichtung zur plasmainduzierten Wasserreinigung gemäß dem zweiten Aspekt der Erfindung;

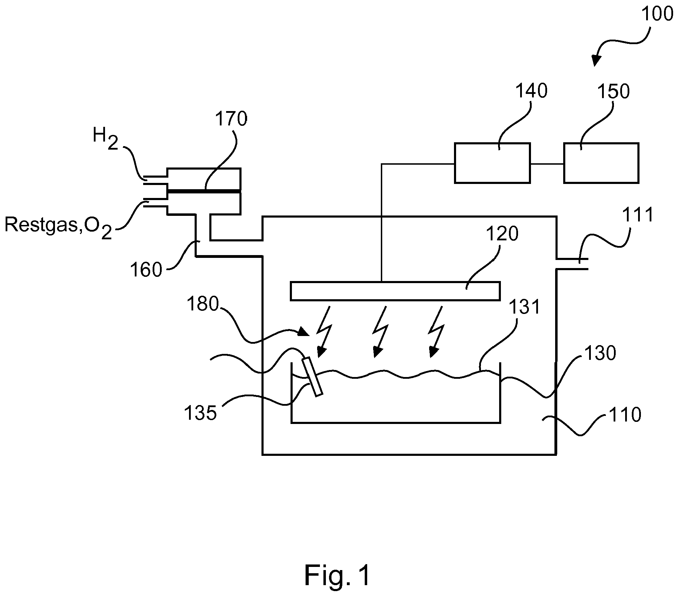

Fig.1 zeigt eine Ausführungsform einer Vorrichtung 100 zur plasmainduzierten Reinigung von mit wenigstens einem Abwasserinhaltsstoff belastetem Wasser, hier von Brüdenwasser, umfassend in einem Reaktionsraum 110 ein ungeerdetes Wasserreservoir 130 sowie genau eine flächig ausgebildete, gekühlte Plasmaelektrode 120, die in einem vorbestimmten Abstand, im gezeigten Ausführungsbeispiel 1 cm, über einer Füllhöhe 131 des Wasserreservoirs 130 angeordnet ist. Im Wasser ist ein Sensor 135 zum Erfassen der Konzentration des mindestens einen Abwasserinhaltsstoffs, hier von Ammonium angeordnet Am Reaktionsraum 110 ist eine gemeinsame Abgasleitung 160 für Wasserstoff und Sauerstoff angeordnet. Außerhalb des Reaktionsraumes 110 ist ein Hochfrequenzgenerator 150 angeordnet, der mit der Plasmaelektrode 120 über ein Anpassungsnetzwerk 140 zur Impedanzanpassung einer Impedanz eines an der Plasmaelektrode 120 entstehenden Plasmas 180 und einer Ausgangsimpedanz des Hochfrequenzgenerators verbunden ist. Das Anpassungsnetzwerk 140 umfasst in der gezeigten Ausführungsform einen motorgesteuerten Kondensator und eine variable Spule als elektrischen Schwingkreis. Das Anpassungsnetzwerk ist ausgebildet, die Impedanz des Plasmas, welche im Prozess über Ihre Abhängigkeit von insbesondere einem Abstand der Plasmaelektrode 120 zur Wasseroberfläche, einer Wasserzusammensetzung, einer Temperatur im Reaktionsraum sowie einer Atmosphäre im Reaktionsraum, und die Ausgangsimpedanz des Hochfrequenzgenerators 150 anzupassen. Die Ausgangsimpedanz des Hochfrequenzgenerators 150 beträgt vorteilhaft 50 Ohm. Im Reaktionsraum herrscht wie auch in der Umgebung Atmosphärendruck. Die Ausbildung eines flächigen Plasmas zwischen der Plasmaelektrode 120 und der Oberfläche des Wassers im Wasserreservoir 130 unter Atmosphärendruck ist hier möglich, weil nur genau eine Elektrode, nämlich die Plasmaelektrode 120 genutzt wird und als Gegenstück das Wasser selbst genutzt wird. Zur Erzeugung des Plasmas 180 wird die Plasmaelektrode 120 mit einer hochfrequenten Wechselspannung beaufschlagt, die der Hochfrequenzgenerator 150 bereitstellt. Diese hochfrequente Wechselspannung weist in der gezeigten Ausführungsform eine Frequenz im Bereich von 10 bis 20 MHz auf. Die Plasmaelektrode wird dabei mit einer Leistung von 1 bis 40 kW beaufschlagt. Die Dissoziationsreaktionen des Wassers sowie der Abwasserinhaltsstoffe erfolgen in einem plasmachemischen Gas- und Wasservolumenprozess. Es werden einzelne Verbindungen der Abwasserinhaltsstoffe unter Einwirkung des Plasmas aufgetrennt und darüber die Verbindungspartner freigesetzt, die dann beispielsweise zu gasförmigem Wasserstoff, gasförmigem Sauerstoff, gasförmigem Stickstoff reagieren. Darüber wird einerseits das Wasser effektiv gereinigt und andererseits werden erwünschte Nebenprodukte wie Wasserstoff freigesetzt. Die Entladungen im Gas- und Wasservolumen sowie an der Wasseroberfläche führen zur Erzeugung von freien Elektronen in einem für die Dissoziation von Wasser und den Abwasserinhaltsstoffen günstigen Energiebereich. Durch Stöße mit den Wasser- und Gasmolekülen kommt es zur Bildung zahlreicher angeregter Moleküle- und Atomspezies. Über eine Zweistoßreaktion und eine extreme Ladungsverschiebung zwischen Elektrode und dem Wasser erfolgt die Dissoziation. Das Plasma wirkt mit seinem Elektronenüberschuss dabei als "Reduktionsmittel".

Die Beaufschlagung mit Plasma erfolgt so lange bis die Konzentration des Abwasserinhaltsstoffes unterhalb eines vorbestimmten Grenzwertes liegt und das gereinigte Wasser somit weiterverwendet werden kann.

Die Plasmaelektrode 120 weist im gezeigten Ausführungsbeispiel einen metallischen Grundkörper, hier aus Aluminium, auf, der mit einem Dielektrikum, hier Aluminiumoxid beschichtet ist. Das flächige Plasma 180 wird daher über eine Barrierenentladung ausgebildet.

In der gemeinsamen Abgasleitung 160 ist eine Membran 170 zur Trennung von Wasserstoff vom Restgas angeordnet. Diese können dann im Anschluss getrennt voneinander gesammelt und gelagert werden.

Zusätzlich ist am Reaktionsraum 110 eine Zuführung 111 für mindestens ein Gas in den Reaktionsraum, hier für Luft, Ar, He, CO, CO₂ und/oder Ne angeordnet. Diese Gase werden insbesondere als Atmosphäre im Reaktionsraum während eines Startprozesses, also beim Zünden des Plasmas 180 eingesetzt.

Das belastete Wasser im Wassereservoir weist bevorzugt eine Temperatur im Bereich von 5 bis 25°C auf. Dieser Temperaturbereich begünstigt die Ausbildung eines kontrahierten Plasmas (hier nicht dargestellt). Das kontrahierte Plasma führt zu einer verbesserten Reinigungsleistung. Auch die Verwendung des hier dargestellten filamentierten Modus ist aber möglich.

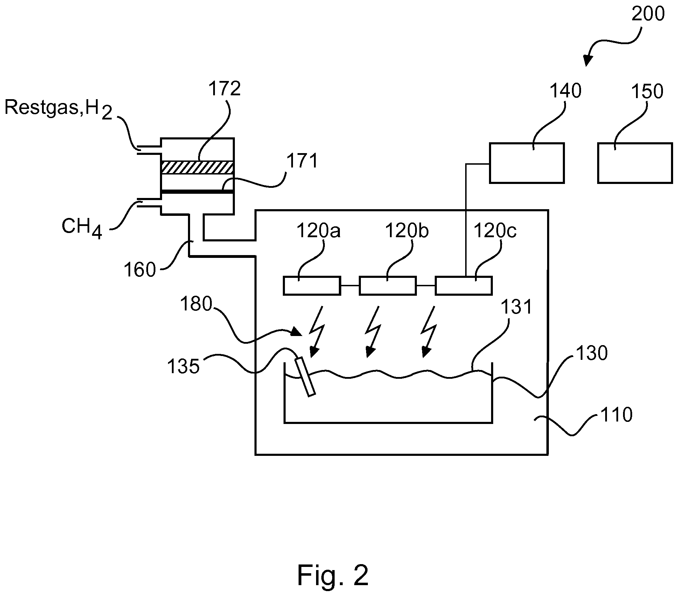

Fig. 2 zeigt ein weiteres Ausführungsbeispiel einer Vorrichtung 200 zur plasmainduzierten Wasserreinigung gemäß dem zweiten Aspekt der Erfindung. Die Vorrichtung 200 entspricht zu großen Teilen der Vorrichtung 100 aus Fig. 1, weshalb nachfolgend nur die Unterschiede beschrieben werden, im Übrigen wird auf die Beschreibung zu Fig. 1 verwiesen.

Im Unterschied zur in Fig. 1 gezeigten flächig ausgebildeten Einzelelektrode ist in Fig. 2 eine Elektrodenanordnung mit drei flächig ausgebildeten Einzelelektroden 120a, 120b, 120c angeordnet, die zusammen die Plasmaelektrode bilden. Alle Einzelelektroden sind untereinander und über das Anpassungsnetzwerk 140 mit dem Hochfrequenzgenerator 150 verbunden. Im gezeigten Ausführungsbeispiel wird insbesondere Abwasser mit Kohlenstoffverbindungen als Abwasserinhaltsstoff eingesetzt. Daher ist in der gemeinsamen Abgasleitung 160, eine Membran 171 angeordnet, über die Methan aus dem Gasgemisch abgetrennt wird. Darüber hinaus ist ein Adsorber 172 zur Adsorption von Sauerstoff angeordnet. Damit verbleiben nur Wasserstoff sowie etwaige weitere Restgase in der Abgasmischung. Diese können über weitere Membranen oder Adsorber aufgetrennt werden.

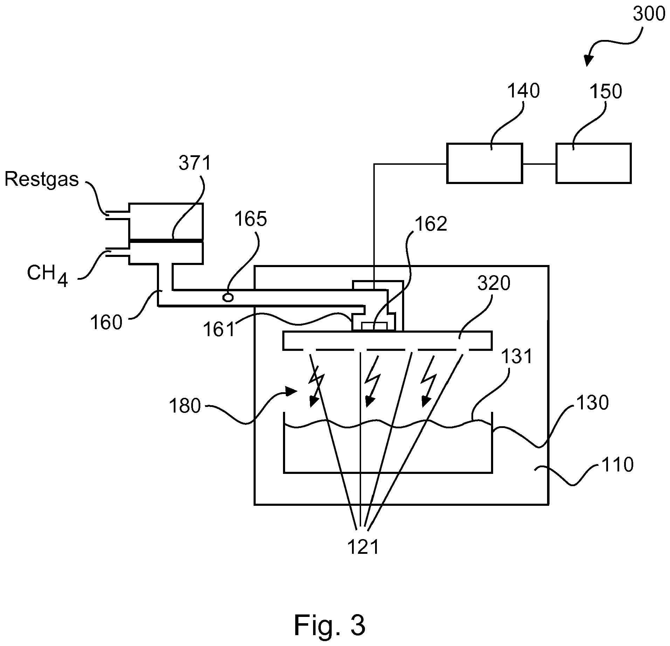

Fig. 3 zeigt ein Ausführungsbeispiel einer Vorrichtung 300 zur Gewinnung von Methan aus mit mindestens einem Abwasserinhaltsstoff belastetem Wasser gemäß dem vierten Aspekt der Erfindung. Die Vorrichtung 300 entspricht zu großen Teilen der Vorrichtung 100 aus Fig. 1, weshalb nachfolgend nur die Unterschiede beschrieben werden, im Übrigen wird auf die Beschreibung zu Fig. 1 verwiesen. Im Unterschied zur Vorrichtung in Fig. 1 ist in der hier gezeigten Ausführungsform kein Sensor zur Erfassung der Konzentration eines Abwasserinhaltsstoffes vorgesehen, sondern ein Sensor 165 zum Erfassen einer Konzentration von Methan in der Abgasleitung 160. Des Weiteren ist die Plasmaelektrode 320 hier derart ausgebildet, dass die Abgasleitung 160 durch sie verläuft. Die Plasmaelektrode weist dabei Öffnungen 121 auf, durch die entstehenden Gase in die Abgasleitung gelangen. Darüber hinaus ist in der Plasmaelektrode 320 in der Abgasleitung 160 eine Katalysatorkammer 161 mit einem als Granulat ausgebildeten Katalysator 162 für die Methanisierung von Kohlenstoff angeordnet. Am Ende der Abgasleitung wird Methan über eine Membran 371 vom Restgas abgetrennt. In dieser Anordnung wird auf die Gewinnung von Methan aus mit Kohlenstoffverbindungen belastetem Wasser fokussiert, der prinzipielle Aufbau stimmt mit dem einer Vorrichtung zur Wasserreinigung überein. Die Kohlenstoffverbindungen in den Abwasserinhaltsstoffen werden im Rahmen des Plasmaprozesses dissoziiert, dabei wird Kohlenstoff freigesetzt, der zunächst zu Kohlenmonoxid oder Kohlendioxid beispielsweise mit Sauerstoff aus der latent vorhandenen Wasserdissoziation oder anderen Dissoziationsreaktionen reagiert. Ist dann eine ausreichende Kohlenmonoxid- und/oder Kohlendioxidmenge vorhanden, findet begünstigt vom Plasma eine Reaktion mit dem ebenfalls mindestens aus der latenten Wasserdissoziation vorhandenen Wasserstoff zu Methan statt. Diese Reaktion wird über den eingesetzten Katalysator verstärkt. Bevorzugt wird zur Methangewinnung Wasser gereinigt, das zusätzlich über Ammonium verfügt, so dass größerer Mengen an Wasserstoff freigesetzt werden als durch die Wasserdissoziation.

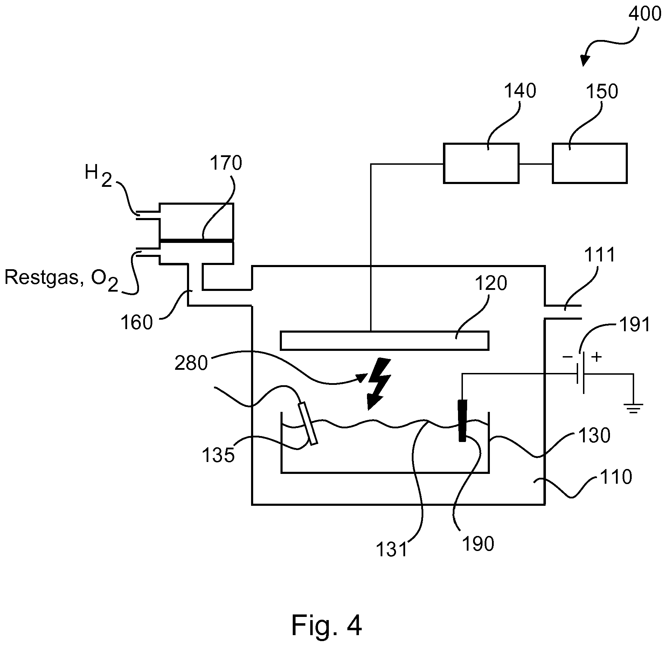

Fig. 4 zeigt ein weiteres Ausführungsbeispiel einer Vorrichtung 400 zur plasmainduzierten Wasserreinigung gemäß dem zweiten Aspekt der Erfindung. Die Vorrichtung 400 entspricht zu großen Teilen der Vorrichtung 100 aus Fig. 1, weshalb nachfolgend nur die Unterschiede beschrieben werden, im Übrigen wird auf die Beschreibung zu Fig. 1 verwiesen. In der Vorrichtung 400 ist eine Elektrode 190 im Wasserreservoir 130 angeordnet, die mit dem Minuspol einer Gleichspannungsquelle 191 verbunden ist. Die derart an das Wasserreservoir angeschlossene Gleichspannung wirkt ähnlich einer Offsetspannung und führt zu einem zu einem kontrahierten Plasma 280, hier symbolisiert durch den breiten Blitz, und damit einer verbesserten Reinigungsleistung. Dabei tritt ein geringer Gleichstrom im belasteten Wasser auf, der nur über das Plasma der Elektrode fließt.

**Bezugszeichenliste:**

| | |
|---|---|
| 100, 200, 300, 400 | Vorrichtung |
| 110 | Reaktionsraum |
| 111 | Zuführung für mindestens ein Gas |
| 120, 320 | Plasmaelektrode |
| 120a, 120b, 120c, | Einzelelektrode |
| 121 | Öffnung |
| 130 | Wasserreservoir |
| 131 | Füllhöhe |
| 135 | Sensor für Abwasserinhaltsstoffkonzentration |
| 140 | Anpassungsnetzwerk |
| 150 | Hochfrequenzgerator |
| 160 | Abgasleitung |
| 161 | Katalysatorkammer |
| 162 | Katalysator |
| 165 | Sensor |
| 170, 371 | Membran |
| 171 | zusätzliche Membran |
| 172 | Adsorber |
| 180 | Plasma |
| 190 | Elektrode |
| 191 | Gleichspannungsquelle |
| 280 | kontrahiertes Plasma |

## Patentansprüche

1. Verfahren zur Reinigung von mit mindestens einem Abwasserinhaltsstoff belastetem Wasser, wobei der Abwasserinhaltsstoff mindestens eine Verbindung mit einer Bindungsenergie aufweist, die geringer ist als die Bindungsenergie einer einfachen Wasserstoff-Sauerstoffbindung, umfassend die Schritte:
- Bereitstellen des belasteten Wassers mit einer vorbestimmten Füllhöhe in einem ungeerdeten Wasserreservoir (130) innerhalb eines Reaktionsraumes (110);
- Beaufschlagen genau einer in einem vorbestimmten Abstand über der Füllhöhe des Wasserreservoirs (130) angeordneten flächig ausgebildeten, gekühlten Plasmaelektrode (120) mit einer hochfrequenten Wechselspannung bei Atmosphärendruck, derart, dass sich im Hochfrequenzfeld zwischen der Plasmaelektrode (120) und einer Oberfläche des Wassers ein Plasma ausbildet, dessen Energieeintrag ausreichend ist, dass Verbindungen mit einer Bindungsenergie, die kleiner oder gleich derjenigen der einfachen Wasserstoff-Sauerstoffbindung ist, dissoziiert werden;
- Erfassen einer Konzentration des mindestens einen Abwasserinhaltsstoffs.

2. Verfahren nach Anspruch 1, bei dem das Beaufschlagen der Plasmaelektrode mit einer hochfrequenten Wechselspannung derart erfolgt, dass das Plasma ein kontrahiertes Plasma ist.

3. Verfahren nach Anspruch 2, bei dem eine Gleichspannung mit ihrem Minuspol mit dem Wasserreservoir (130) verbunden ist, wobei die Gleichspannung bevorzugt im Bereich von 100 V bis 3000 V und 0,01 mA bis 250 mA liegt.

4. Verfahren zur Reinigung nach einem der vorstehenden Ansprüche, bei dem das Bereitstellen des belasteten Wassers umfasst:
- Aufkonzentrieren des mindestens einen Abwasserinhaltsstoffs im belasteten Wasser.

5. Verfahren zur Reinigung nach einem der vorstehenden Ansprüche, bei dem das belastete Wasser in mindestens einem Transportbehälter gesammelt wird, im Transportbehälter transportiert wird und das Bereitstellen des belasteten Wassers im Wasserreservoir aus dem Transportbehälter erfolgt.

6. Verfahren nach einem der vorstehenden Ansprüche, weiter umfassend:
- Vergleichen der erfassten Konzentration mit einem hinterlegten Grenzwert und bei dem, wenn die erfasste Konzentration kleiner oder gleich dem hinterlegten Grenzwert ist,
- das Beaufschlagen beendet wird oder
- das behandelte Wasser abgeführt und durch belastetes Wasser ersetzt wird.

7. Verfahren nach einem der vorstehenden Ansprüche, bei dem der mindestens eine Abwasserinhaltsstoff ausgewählt ist aus der Gruppe der Stickstoffverbindungen, insbesondere der Stickstoff-Wasserstoffverbindungen, der Kohlenstoffverbindungen, der Bor-, Sauerstoff-, Phosphor-, Schwefel- oder Chlor-Verbindungen.

8. Verfahren nach einem der vorstehenden Ansprüche, bei dem zum Beaufschlagen der Plasmaelektrode (130) mit der hochfrequenten Wechselspannung ein Hochfrequenzgenerator (150) mit einer vorbestimmten Ausgangsimpedanz eingesetzt wird, der mit der Plasmaelektrode über ein Anpassungsnetzwerk (140) zur Impedanzanpassung einer Impedanz des Plasmas und der Ausgangsimpedanz des Hochfrequenzgenerators verbunden ist, wobei insbesondere eine Intensität und Leistung einer hin- und einer rücklaufenden Welle zum Hochfrequenzgenerator gemessen wird und in Abhängigkeit der Leistung der hinlaufenden Welle die Generatorleistung stabilisiert wird und die Leistung der rücklaufenden Welle abhängig von einer Leitfähigkeit des belasteten Wassers über das Anpassungsnetzwerk minimiert wird.

9. Verfahren nach einem der vorstehenden Ansprüche, weiter umfassend
- Sammeln von durch die Dissoziation entstehenden Gasen in einer gemeinsamen Abgasleitung,
- Trennen der entstehenden Gase über einen mehrstufigen Membranprozess und/oder über die Verwendung selektiver Adsorptionsverfahren.

10. Verfahren nach einem der vorstehenden Ansprüche, bei dem das belastete Wasser mindestens eine Stickstoff-Wasserstoffverbindung und mindestens eine Kohlenstoffverbindung als Abwasserinhaltsstoffe aufweist, weiterhin umfassend:
- Sammeln von durch die Dissoziation entstehenden Gasen in einer gemeinsamen Abgasleitung
- Messung einer Methankonzentration in der gemeinsamen Abgasleitung
- Aufrechterhaltung der Beaufschlagung bis eine Mindestkonzentration von Methan in der Abgasleitung erreicht ist, wobei insbesondere ein Katalysator zur Methanisierung von Kohlenmonoxid und/oder Kohlendioxid eingesetzt wird.

11. Vorrichtung (100) zur Reinigung von mit mindestens einem Abwasserinhaltsstoff belastetem Wasser umfassend:
in einem Reaktionsraum (110)
- ein ungeerdetes Wasserreservoir (130);
- genau eine flächig ausgebildete, gekühlte Plasmaelektrode (120), die in einem vorbestimmten Abstand über einer Füllhöhe des Wasserreservoirs angeordnet ist,
- einen Sensor (135) zum Erfassen einer Konzentration des Abwasserinhaltsstoffs
und außerhalb des Reaktionsraumes
- einen Hochfrequenzgenerator (150) mit vorbestimmter Ausgangsimpedanz, der mit der Plasmaelektrode über ein Anpassungsnetzwerk (140) zur Impedanzanpassung einer Impedanz eines an der Plasmaelektrode entstehenden Plasmas und der Ausgangsimpedanz des Hochfrequenzgenerators verbunden ist.

12. Vorrichtung (100) nach Anspruch 11, bei der eine Gleichstromquelle (191) mit ihrem Minuspol über eine Elektrode mit dem Wasserreservoir verbunden ist.

13. Vorrichtung (100) nach Anspruch 11 oder 12, bei der der Hochfrequenzgenerator (150) eine Messeinrichtung zum Messen einer Intensität und einer Leistung einer hin- und einer rücklaufenden Welle umfasst.

14. Vorrichtung (100) nach einem der Ansprüche 11 bis 13, bei der die Plasmaelektrode (120) mit einem Dielektrikum beschichtet ist und das Plasma als Barrierenentladung ausgebildet wird und/oder bei der eine Plasmaelektrodenanordnung aus mehreren nebeneinander angeordneten Einzelelektroden im vorbestimmten Abstand über dem Wasserreservoir die genau eine Plasmaelektrode bildet.

15. Vorrichtung (100) nach einem der Ansprüche 11 bis 14, bei der das Wasserreservoir (130) über einen Zulauf und mindestens einen Ablauf verfügt und der Sensor im Bereich des mindestens einen Ablaufs angeordnet ist und/oder bei der das Wasserreservoir über eine Füllstandsregelung, die ausgebildet ist, die Füllhöhe des Wassers nahezu konstant zu halten, oder einen Überlauf verfügt.

## Claims

1. Method for the purification of water contaminated with at least one wastewater constituent, wherein the wastewater constituent has at least one bond with a bond energy which is less than the bond energy of a simple hydrogen-oxygen bond, comprising the steps:
- provision of the contaminated water with a predetermined filling level in an unearthed water reservoir (130) within a reaction chamber (110);
- impinging precisely one flat-shaped, cooled plasma electrode (120) arranged at a predetermined distance above the filling level of the water reservoir (130) with a high-frequency alternating voltage at atmospheric pressure, such that a plasma forms in the high-frequency field between the plasma electrode (120) and a surface of the water, the energy input of which is sufficient that bonds are dissociated which have a bond energy which is less than or equal to those of the simple hydrogen-oxygen bond;
- detecting a concentration of the at least one wastewater constituent.

2. Method according to claim 1, in which the impinging of the plasma electrode with a high-frequency alternating voltage is carried out such that the plasma is a contracted plasma.

3. Method according to claim 2, in which a DC voltage is connected with its negative terminal with the water reservoir (130), wherein the DC voltage is preferably in the range from 100 V to 3000 V and 0.01 mA to 250 mA.

4. Method for purification according to any of the preceding claims, in which the provision of the contaminated water comprises:
- concentrating the at least one wastewater constituent in the contaminated water.

5. Method for purification according to any of the preceding claims, in which the contaminated water is collected in at least one transport container, is transported in the transport container and the provision of the contaminated water in the water reservoir is carried out from the transport container.

6. Method according to any of the preceding claims, further comprising:
- comparing the detected concentration with a stored threshold value, and in the case of which, when the detected concentration is less than or equal to the stored threshold value,
- the impingement is stopped or
- the treated water is removed and replaced by contaminated water.

7. Method according to any of the preceding claims, in which the at least one wastewater constituent is selected from the group of the nitrogen compounds, in particular the nitrogen-hydrogen compounds, the carbon compounds, the boron, oxygen, phosphorus, sulphur or chlorine compounds.

8. Method according to any of the previous claims, in which for impinging the plasma electrode (130) with the high-frequency alternating voltage a high-frequency generator (150) with a predetermined output impedance is used, which is connected with the plasma electrode via an adaptation network (140) for the impedance adaptation of an impedance of the plasma and the output impedance of the high frequency generator, wherein in particular an intensity and power of one outgoing and one return wave to the high-frequency generator is measured and the generator power is stabilised as a function of the power of the outgoing wave and the power of the return wave is minimised via the adaptation network as a function of a conductivity of the contaminated water.

9. Method according to any of the preceding claims, further comprising
- collecting gases resulting from the dissociation in a common exhaust gas line,
- separating the resulting gases by way of a multi-step membrane process and/or by way of the use of selective adsorption methods.

10. Method according to any of the preceding claims, in which the contaminated water has at least one nitrogen-hydrogen compound and at least one carbon compound as wastewater constituent, furthermore comprising:
- collecting gases resulting from the dissociation in a common exhaust gas line
- measuring a methane concentration in the common exhaust gas line
- maintaining the impingement until a minimum concentration of methane has been reached in the exhaust gas line, wherein in particular a catalyst is used for the methanisation of carbon monoxide and/or carbon dioxide.

11. Device (100) for purifying water contaminated by at least one wastewater constituent, comprising:
in a reaction chamber (110)
- an unearthed water reservoir (130);
- precisely one flat-shaped, cooled plasma electrode (120) which is arranged at a predetermined distance above a filling level of the water reservoir,
- a sensor (135) for detecting a concentration of the wastewater constituent
and externally to the reaction chamber
- a high-frequency generator (150) with predetermined output impedance which is connected with the plasma electrode by way of an adaptation network (140) for the impedance adaptation of a plasma resulting at the plasma electrode and the output impedance of the high-frequency generator.

12. Device (100) according to claim 11, in which a direct current source (191) is connected with its negative terminal to the water reservoir by way of an electrode.

13. Device (100) according to claim 11 or 12, in which the high-frequency (150) has a measuring device for measuring an intensity and a power of one outgoing and one return wave.

14. Device (100) according to any of claims 11 to 13, in which the plasma electrode (120) is coated with a dielectric and the plasma is in the form of a barrier discharge and/or in which a plasma electrode arrangement consisting of several individual electrodes arranged adjacent to one another forms the precisely one plasma electrode at a predetermined distance above the water reservoir.

15. Device (100) according to any of claims 11 to 14, in which the water reservoir (130) has an inflow and at least one outflow and the sensor is arranged in the region of the at least one outflow and/or in which the water reservoir has a filling level regulating device which is configured to maintain the filling level of the water at a virtually constant level, or an overflow.

## Revendications

1. Procédé de nettoyage d'eau contaminée par au moins un constituant d'eau usée, le constituant d'eau usée ayant au moins un composé avec une énergie de liaison qui est inférieure à l'énergie de liaison d'une simple liaison hydrogène-oxygène, comprenant les étapes consistant à :
- fournir l'eau polluée avec un niveau de remplissage prédéterminé dans un réservoir d'eau non mis à la terre (130) à l'intérieur d'une chambre de réaction (110) ;
- appliquer une tension alternative haute fréquence à pression atmosphérique à exactement une électrode à plasma plate et refroidie (120) disposée à une distance prédéterminée au-dessus du niveau de remplissage du réservoir d'eau (130) de telle sorte que le champ haute fréquence entre les l'électrode à plasma (120) et une surface de l'eau forment un plasma dont l'apport d'énergie est suffisant pour dissocier des composés dont l'énergie de liaison est inférieure ou égale à celle de la simple liaison hydrogène-oxygène ;
- détecter une concentration dudit au moins un constituant des eaux usées.

2. Procédé selon la revendication 1, dans lequel l'électrode à plasma est soumise à une tension alternative haute fréquence de manière à ce que le plasma soit un plasma contracté.

3. Procédé selon la revendication 2, dans lequel une tension continue est connectée à son pôle négatif avec le réservoir d'eau (130), dans lequel la tension continue est de préférence dans la plage de 100 V à 3000 V et 0,01 mA à 250 mA.

4. Procédé de nettoyage selon l'une des revendications précédentes, dans lequel la fourniture de l'eau polluée comprend :
- la concentration de l'au moins un constituant des eaux usées dans l'eau polluée.

5. Procédé de nettoyage selon l'une des revendications précédentes, dans lequel l'eau polluée est collectée dans au moins un récipient de transport, est transportée dans le récipient de transport et la mise à disposition de l'eau polluée dans le réservoir d'eau s'effectue à partir du récipient de transport.

6. Procédé selon l'une quelconque des revendications précédentes, comprenant en outre :
- la comparaison de la concentration enregistrée avec une valeur limite mémorisée et lorsque la concentration enregistrée est inférieure ou égale à la valeur limite mémorisée,
- l'application de la tension est terminée, ou
- l'eau traitée est rejetée et remplacée par de l'eau contaminée.

7. Procédé selon l'une quelconque des revendications précédentes, dans lequel l'au moins un constituant des eaux usées est choisi dans le groupe des composés azotés, en particulier les composés azote-hydrogène, les composés carbonés, les composés du bore, de l'oxygène, du phosphore, du soufre ou du chlore.

8. Procédé selon l'une quelconque des revendications précédentes, dans lequel pour appliquer la tension alternative haute fréquence à l'électrode à plasma (130), un générateur haute fréquence (150) avec une impédance de sortie prédéterminée est utilisé, qui est connecté à l'électrode à plasma via un réseau d'adaptation (140) pour l'adaptation d'impédance d'une impédance du plasma et l'impédance de sortie du générateur haute fréquence, avec notamment la mesure d'une intensité et une puissance de l'onde d'aller et de retour vers le générateur haute fréquence et, en fonction de la puissance de l'onde sortante, la puissance du générateur est stabilisée et la puissance de l'onde de retour est minimisée en fonction d'une conductivité de l'eau polluée via le réseau d'adaptation.

9. Procédé selon l'une quelconque des revendications précédentes, comprenant en outre
- le collecte des gaz résultant de la dissociation dans un gaz de décharge commun,
- la séparation des gaz résultants par un procédé membranaire multi-étages et/ou par des procédés d'adsorption sélective.

10. Procédé selon l'une quelconque des revendications précédentes, dans lequel l'eau polluée présente au moins un composé azote-hydrogène et au moins un composé carboné comme constituants des eaux usées, comprenant en outre les étapes consistant à :
- collecter des gaz résultant de la dissociation dans un tuyau de décharge commun
- mesurer une concentration de méthane dans le tuyau de décharge commun
- maintenir l'admission jusqu'à ce qu'une concentration minimale de méthane dans le tuyau de décharge soit atteinte, en particulier un catalyseur de méthanation du monoxyde de carbone et/ou du dioxyde de carbone étant utilisé.

11. Dispositif (100) d'épuration d'eau contaminée par au moins un constituant d'eau usée, comprenant :
dans un espace de réaction (110)
- un réservoir d'eau non enterré (130) ;
- une électrode à plasma exactement plate et refroidie (120), qui est disposée à une distance prédéterminée au-dessus d'un niveau de remplissage du réservoir d'eau,
- un capteur (135) pour détecter une concentration de la teneur en eaux usées,
et hors de l'espace de réaction
- un générateur haute fréquence (150) avec une impédance de sortie prédéterminée, qui est connecté à l'électrode à plasma via un réseau d'adaptation (140) pour l'adaptation d'impédance d'une impédance apparaissant au niveau de l'électrode à plasma et l'impédance de sortie du générateur haute fréquence.

12. Dispositif (100) selon la revendication 11, dans lequel une source de courant continu (191) avec son pôle négatif est reliée au réservoir d'eau via une électrode.

13. Dispositif (100) selon la revendication 11 ou 12, dans lequel le générateur haute fréquence (150) comprend un dispositif de mesure pour mesurer une intensité et une puissance d'une onde aller et d'une onde retour.

14. Dispositif (100) selon l'une quelconque des revendications 11 à 13, dans lequel l'électrode à plasma (120) est recouverte d'un diélectrique et le plasma est formé comme une décharge à barrière et/ou dans lequel un agencement d'électrodes à plasma composé de plusieurs électrodes individuelles disposées les unes à côté des autres à une distance prédéterminée au-dessus du réservoir d'eau forme exactement une électrode à plasma.

15. Dispositif (100) selon l'une des revendications 11 à 14, dans lequel le réservoir d'eau (130) présente une entrée et au moins une sortie et le capteur est disposé au niveau de l'au moins une sortie et/ou dans lequel le réservoir d'eau présente un contrôle de niveau, qui est conçu pour maintenir le niveau d'eau presque constant, ou présente un trop-plein.
